# EUROPEAN PATENT APPLICATION

(11) **EP 1 832 668 A1**
(43) Date of publication of application: **12.09.2007**
(21) Application number: 07102932.6
(22) Date of filing: 23.02.2007
(51) Int. Cl.: C23C 4/02, C23C 28/00, F01D 5/00

(54) **Local repair process of thermal barrier coatings in turbine engine components**

(30) Priority: 24.02.2006 US 361740
(71) Applicant: GENERAL ELECTRIC COMPANY, Schenectady, NY 12345 (US)
(72) Inventor: POTTER, Kenneth Burrell, Simpsonville, SC 29681 (US); WANG, John Zhiqiang, Westfield, IN 46074 (US); BAILEY, Mark, Simpsonville, SC 29680 (US); BUCCI, David, Simpsonville, SC 29681 (US)
(74) Representative: Illingworth-Law, William Illingworth

(57) **Abstract**

Processes locally repairing a thermal barrier coating system (10) on a turbine component (14) that has suffered localized spallation includes locally cleaning a spalled region (20) with water to remove spallation from the spalled region (20) and form a tapered profile in the existing thermal barrier coating (10); and locally thermally spraying (24) a powder mixture into the cleaned localized spalled region (20) to form a repaired thermal barrier coating (26). Also disclosed herein are repair processes for platforms of bucket turbine engine components (50).

## Description

### BACKGROUND

The present disclosure is generally directed to turbine engine components. More particularly, the present disclosure is directed to localized repair of thermal barrier coatings that have suffered localized spallation.

Thermal barrier coating systems (TBC) are often used to protect and insulate metallic components in gas turbine engines exposed to high-temperature environments. As an example, turbine blades and other parts of turbine engines are often formed of nickel-based superalloys because they need to maintain their integrity at operating temperatures of at least about 1,000° to 1,150° C. Thermal barrier coating systems provide greater resistance to corrosion and oxidation at the high temperature environments, as compared to the alloys themselves. TBC systems generally comprise a bond coat and a topcoat layer, which is typically formed of a ceramic material.

When such a protective coating becomes worn or damaged, it must be carefully repaired, since direct exposure of the underlying substrate to excessive temperature may eventually cause the component to fail and adversely affect various parts of the engine. The TBC often have to be repaired several times during the lifetime of the component. The "overhaul" of the protective coating usually involves complete removal of the coating followed by the application of a new protective TBC system.

In many situations, certain portions (i.e., "local areas") of the protective coating require repair, while the remainder of the coating remains intact. As an example, spallation is known to locally occur over hot gas path (HGP) surfaces. Though spallation typically occurs in localized regions or patches, the conventional repair method has been to completely remove the thermal barrier coating, restore or repair the bond layer surface as necessary, and then reapply the ceramic portion of the TBC system. Prior art techniques for removing TBC's include grit blasting or chemically stripping with an alkaline solution at high temperatures and pressures. However, grit blasting is a slow, labor-intensive process and erodes the surface beneath the coating. With repetitive use, the grit blasting process eventually destroys the component. The use of an alkaline solution to remove a thermal barrier coating is also less than ideal, since the process requires the use of an autoclave operating at high temperatures and pressures. Once the thermal barrier coating is completely stripped, the surfaces are then recoated. Recoating the component can include multiple electroplating steps, multiple weld build up steps, the use of slurries, and the like followed by machining to provide the tolerances generally needed for operation of the component in the gas turbine engine.

Other repair techniques include local repair of the damaged surface. In these repair processes the damaged area is first cleaned and then repaired with a patch or slurry method. However, due to concerns of coating integrity and high reliability requirements needed for turbine components, the patch or slurry method may not be suitable for localized repair.

Moreover, the repair cycle times and costs are relatively lengthy and expensive. Consequently, conventional repair methods are labor-intensive and expensive, and can be difficult to perform on components with complex geometries, such as airfoils, buckets, and shrouds.

In view of the foregoing, there remains a need in the art for improved repair processes of thermal barrier coatings that have suffered localized spallation.

### BRIEF SUMMARY

Disclosed herein are processes for locally repairing thermal barrier coatings that have suffered localized spallation. In one embodiment, a method for locally repairing a thermal barrier coating system on a turbine component that has suffered localized spallation comprises locally cleaning a localized spalled region with water to remove spallation from the localized spalled region, wherein the water is projected onto the localized spalled region to form a tapered profile in the existing thermal barrier coating; and locally thermally spraying a powder mixture into the cleaned localized spalled region.

A process for repairing a platform of a turbine bucket comprises selectively stripping a thermal barrier coating system from the platform region with water and forming a tapered profile with the thermal barrier coating system disposed on other portions of the bucket; and thermally spraying a powder mixture onto the platform and depositing a new thermal barrier coating system, wherein the new thermal barrier coating system is integrated with the tapered profile to form a seam free of gaps.

The disclosure may be understood more readily by reference to the following detailed description of the various features of the disclosure provided by way of example only and the examples included therein.

### BRIEF DESCRIPTION OF THE DRAWINGS

Referring now to the figures wherein the like elements are numbered alike:
Figure 1 is a cross sectional view illustrating a typical thermal barrier coating system deposited onto a turbine component, wherein the illustrated thermal barrier coating system includes a locally spalled region;
Figure 2 is a cross sectional view illustrating the thermal barrier coating system after locally cleaning and stripping the locally spalled region, wherein the cleaning process provides a tapered profile to the existing thermal barrier coating;
Figure 3 is a cross sectional view illustrating local recoating of the thermal barrier coating using a thermal spray process; and
Figure 4 illustrates a perspective view of a bucket turbine engine component.

### DETAILED DESCRIPTION

Disclosed herein is a process for locally repairing thermal barrier coating systems that have suffered localized spallation with a programmable machining process such as a water jet process to locally clean and strip the spalled region followed by recoating the surface with a programmable thermal spray process such as air plasma spray (APS) or high velocity oxy-fuel process (HVOF). Advantageously, the process significantly reduces repair cycle times and costs while providing coating integrity and high reliability to the turbine component. The removed region is designed to taper into the existing thermal barrier coating so as to prevent a weak seam from being formed between the existing coating and the newly applied coating. Moreover, the process minimizes thermal exposure to other parts of the component. For example, the process can be used to repair a bucket platform without exposing the tips of the airfoil to the process.

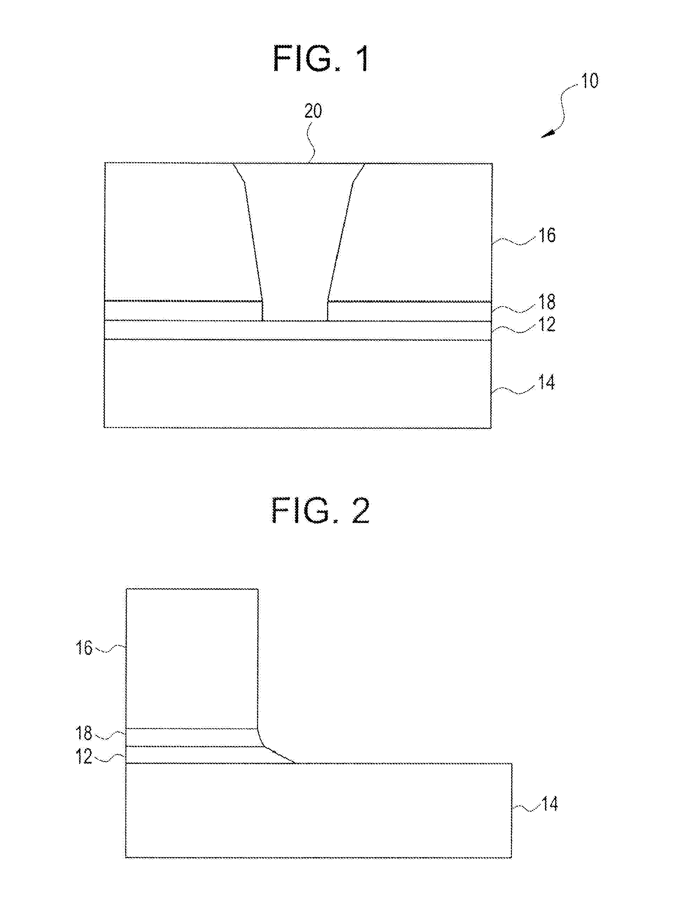

Referring now to Figure 1, there is illustrated a typical thermal barrier coating system, generally designated by reference numeral 10, having a locally spalled region 20. The system generally includes a bond coat 12 deposited on the surface of a turbine engine component 14 and a ceramic layer 16 disposed thereon. The form of the turbine engine component varies among combustor liners, combustor domes, shrouds, buckets or blades, nozzles or vanes. The component is most typically an airfoil, including stationary airfoils such as nozzles or vanes, and rotating airfoils including blades and buckets. Blades and buckets are used herein interchangeably; typically a blade is a rotating airfoil of an aircraft turbine engine, and a bucket is a rotating airfoil of a land-based power generation turbine engine. In the case of a blade or bucket, typically the region under repair is the tip region that is subject to wear due to rubbing contact with a surrounding shroud, and to oxidation in the high-temperature environment. In the case of a nozzle or vane, typically the area under repair is the leading edge, which is subject to wear due to exposure of the highest velocity gases in the engine at elevated temperature. The component may be formed from a nickel, cobalt or iron-based superalloys, or the like. The alloys may be cast or wrought superalloys. Examples of such substrates are GTD-111, GTD-222, Ren 80, Ren 41, Ren 125, Ren 77, Ren N4, Ren N5, Ren N6, 4th generation single crystal superalloy MX-4, Hastelloy X, cobalt-based HS-188, and MAR-M509.

The ceramic layer (top coat) 16, also sometimes referred to as a topcoat, is deposited on the surface of the bond coat 12. The bond coating 12 is typically in the form of an overlay coating such as MCrAlX (where M is iron, cobalt and/or nickel, and X is yttrium or another rare earth element), or diffusion aluminide coatings. The bond coating 12 protects the underlying component 14 from oxidation and enables the ceramic layer 16 to more effectively adhere to the component 14. During the deposition of the ceramic top coat layer and subsequent exposures to high temperatures, such as during engine operation, these bond coats form an oxide scale 18, e.g., a tightly adherent alumina (Al₂O₃) layer, that adheres the top coat to the bond coat.

A preferred material for the ceramic layer 16 is yttria-stabilized zirconia (zirconium oxide) (YSZ), with a preferred composition being about 4 to 8 wt. % yttria, although other ceramic materials may be utilized, such as yttria, non-stabilized zirconia, or zirconia stabilized by magnesia (MgO), ceria (CeO₂), scandia (Sc₂O₃) and/or other oxides. The ceramic layer 16 is deposited to a thickness that is sufficient to provide the required thermal protection for the component 14, typically between about 50 and 1500 microns for most turbines. More preferably, the ceramic layer is a DVC-TBC, which is hereinafter defined as dense vertically cracked thermal barrier coatings exhibiting quasi-columnar microstructures approximating electron beam physical vapor deposited (EB-PVD) coatings.

In an operating turbine, the surfaces of the component 14 are subjected to hot combustion gasses, and are therefore subjected to attack by oxidation, corrosion and erosion. Accordingly, the component 14 must remain protected from this hostile operating environment by the TBC system 10. Loss of the ceramic layer 16 and possibly the bond coat 12, due to spallation brought on by thermal fatigue may lead to premature, and often rapid deterioration of the component 14. A localized spalled region 20 of the ceramic layer 16 is illustrated in Figure 1.

In the repair process, the component 14 is first removed from the turbine and the surface including the localized spalled region 20 is cleaned and stripped so as to remove loose oxides and contaminants, such as grease, oils and soot. While various techniques may be used, one embodiment includes removing the loose material from the spalled region 20 and cleaning the surface with water using a waterjet. The waterjet is programmed to specifically target the spalled region 20 and form a tapered profile to the various layers defining the particular TBC system 10 as shown in Figure 2. This step may be selectively performed to ensure that the surrounding undamaged TBC is not subjected to this procedure. Following cleaning, the spalled region 20 is locally recoated using a thermal spray process.

The family of thermal spray processes includes high velocity oxy-fuel deposition (HVOF) and its variants such as high velocity air-fuel, plasma spray, flame spray, and electric wire arc spray. In most thermal coating processes a material in powder, wire, or rod form (e.g., metal) is heated to near or somewhat above its melting point such that droplets of the material accelerated in a gas stream. The droplets are directed against the surface of a substrate to be coated where they adhere and flow into thin lamellar particles called splats.

In high velocity oxy-fuel and related coating processes, oxygen, air or another source of oxygen, is used to burn a fuel such as hydrogen, propane, propylene, acetylene, or kerosene, in a combustion chamber and the gaseous combustion products allowed to expand through a nozzle. The gas velocity may be supersonic. Powdered coating material is injected into the nozzle and heated to near or above its melting point and accelerated to a relatively high velocity, such as up to about 600 m/sec. for some coating systems. The temperature and velocity of the gas stream through the nozzle, and ultimately the powder particles, can be controlled by varying the composition and flow rate of the gases or liquids into the gun. The molten particles impinge on the surface to be coated and flow into fairly densely packed splats that are well bonded to the substrate and each other.

In the plasma spray coating process a gas is partially ionized by an electric arc as it flows around a tungsten cathode and through a relatively short converging and diverging nozzle. The temperature of the plasma at its core may exceed 30,000 K and the velocity of the gas may be supersonic. Coating material, usually in the form of powder, is injected into the gas plasma and is heated to near or above its melting point and accelerated to a velocity that may reach about 600 m/sec. The rate of heat transfer to the coating material and the ultimate temperature of the coating material are a function of the flow rate and composition of the gas plasma as well as the torch design and powder injection technique. The molten particles are projected against the surface to be coated forming adherent splats.

In the flame spray coating process, oxygen and a fuel such as acetylene are combusted in a torch. Powder, wire, or rod, is injected into the flame where it is melted and accelerated. Particle velocities may reach about 300 m/sec. The maximum temperature of the gas and ultimately the coating material is a function of the flow rate and composition of the gases used and the torch design. Again, the molten particles are projected against the surface to be coated forming adherent splats.

The thermal spray process generally includes introducing a powdered mixture (i.e., particles) to a combustion chamber, spray stream, and/or so forth (depending upon the particular spray process), and sufficiently heating the mixture to enable the particles to splat on and adhere to the component. For example, an HVOF process can be employed where oxygen and fuel combust and propel the powdered mixture at clean locally spalled region 20 of the component. In order to control the production of oxides and/or carbides in the spray as the mixture is propelled at the component, the spray conditions can be controlled. The spray can be controlled such that the temperature of the particles (e.g., coating material(s) being propelled at the component is a temperature sufficient to soften the particles such that they adhere to the component and less than a temperature that causes oxidation of the coating material(s), with the specific temperature dependent upon the type of coating material(s) and structural enhancer(s). For example, the coating temperature can be less than or equal to about 1,500°C, or, more specifically, less than or equal to about 1,200°C, or, even more specifically, about 750°C to about 1,100°C.

The coating material(s) to form the thermal barrier coating system can include nickel (Ni), cobalt (Co), iron (Fe), chromium (Cr), aluminum (Al), yttrium (Y), alloys comprising at least one of the foregoing, as well as combinations comprising at least one of the foregoing, e.g., the coating can comprise MCrAlY (where M comprises nickel, cobalt, iron, and combinations comprising at least one of the forgoing). An MCrAlY coating can further comprise elements such as silicon (Si), ruthenium (Ru), iridium (Ir), osmium (Os), gold (Au), silver (Ag), tantalum (Ta), palladium (Pd), rhenium (Re), hafnium (Hf), platinum (Pt), rhodium (Rh), tungsten (W), alloys comprising at least one of the foregoing, as well as combinations comprising at least one of the foregoing.

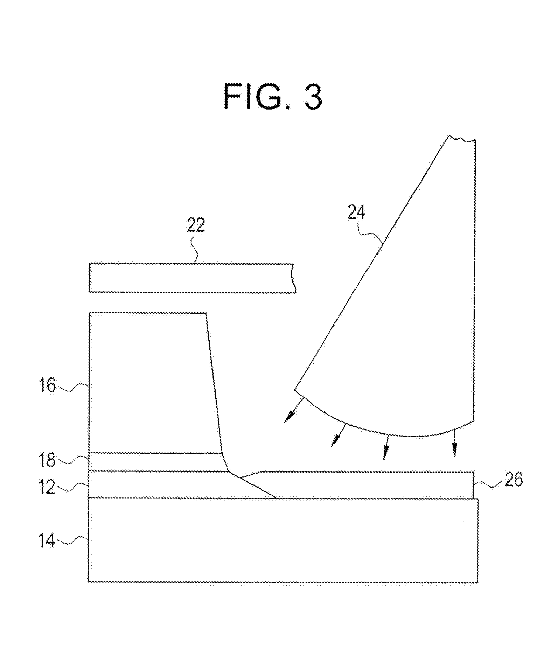

Figure 3 schematically illustrates an exemplary locally repaired TBC system. After cleaning the locally spalled region 20 to impart a tapered profile, a mask 22 is employed in combination with the thermal spray process. By using the mask 22, the thermal spray 24 specifically targets and recoats the damaged region. By careful selection of powder used in thermal spray process, the repaired TBC region 26 can be substantially reproduced to match the coating composition of the existing TBC surrounding the spalled region 20. In this manner, the recoated TBC can be thermally deposited such that there is no overlap of the bond coat 12 onto the topcoat 16 can be effected. Moreover, by using a tapered profile, gaps are eliminated and/or substantially minimized, thereby providing the repaired region with coating properties similar to the existing TBC.

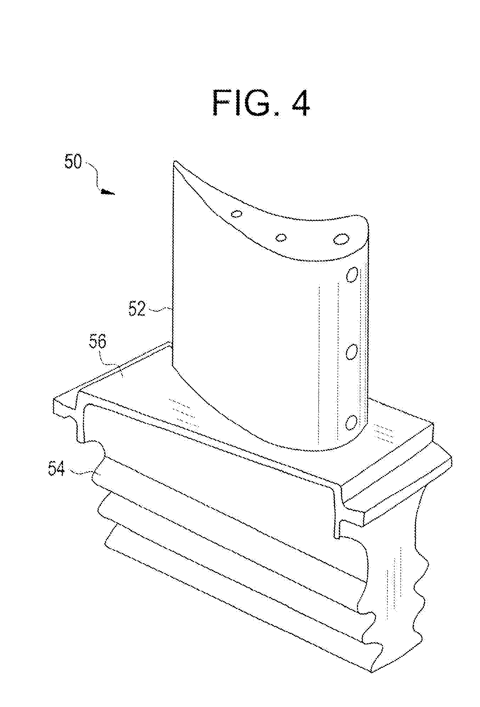

Figure 4 illustrates a bucket turbine engine component generally designated by reference numeral 50. The bucket 50 includes an airfoil portion 52 and a dovetail portion 54. The airfoil portion 52 is seated on a platform 56. All of the surfaces are coated with a thermal barrier coating system, an example of which has been shown with reference to Figure 1. During repeated operation, the platform 56 can undergo spallation as previously described. Advantageously, the above noted repair process can be used to repair the platform. The repair process, since it is locally applied, does not expose the airfoil to the thermal conditions employed during thermal spraying to effect the repair. As is known in the art, during operation the thermal barrier coating system about the airfoil can crack as a result of the stresses applied to the airfoil during operation. Although cracking may occur, the presence of cracks generally does not warrant immediate repair. Prior art thermal spraying processes would require stripping all of the thermal barrier coating system from all surfaces because thermal exposure would cause additional damage, e.g., corrosion, oxidation and the like, to the cracked coating of the airfoil.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A process for locally repairing a thermal barrier coating system (10) on a turbine component (14) that has suffered localized spallation, comprising:
locally cleaning a spalled region (20) with water to remove spallation from the spalled region (20) and form a tapered profile in the existing thermal barrier coating (10); and
locally thermally spraying (24) a powder mixture into the cleaned localized spalled region (20) to form a repaired thermal barrier coating (26).

2. The process of Claim 1, wherein the turbine component (14) comprises a material selected from the group consisting of a nickel-based superalloy, a cobalt-based superalloy and an iron-based superalloy.

3. The process of any one of the preceding claims, wherein the turbine component (14) is disposed within a gas turbine engine.

4. The process of any one of the preceding claims, wherein the repaired thermal barrier coating (26) and the thermal barrier coating system (10) comprises a bond coat (12) in contact with the component (14); an oxide scale (18) formed on the bond coat (12); and a top coat layer (16) disposed on the oxide scale (18).

5. The process of Claim 4, wherein the top coat layer (16) is a ceramic.

6. The process of any one of the preceding claims, wherein the repaired thermal barrier coating (26) is free from overlapping the existing thermal barrier coating (10).

7. The process of any one of the preceding claims, wherein locally thermally spraying the powder mixture comprises a high velocity oxy-fuel thermal spray process.

8. The process of any one of the preceding claims, wherein locally thermally spraying the powder mixture comprises an air plasma spray process.

9. The process of any one of the preceding claims, wherein locally cleaning the spalled region (20) with the water comprises directing a waterjet at the spalled region (20).
